# EUROPÄISCHE PATENTSCHRIFT

(11) **EP 1 393 116 B1**
(45) Veröffentlichungstag und Bekanntmachung des Hinweises auf die Patenterteilung: **28.12.2005**
(21) Anmeldenummer: 02743143.6
(22) Anmeldetag: 04.06.2002
(51) Int. Cl.: G02B 21/00, G02B 21/24

(54) **AUTOFOKUSSIEREINRICHTUNG FÜR EIN OPTISCHES GERÄT**
AUTOMATIC FOCUSSING DEVICE FOR AN OPTICAL APPLIANCE
DISPOSITIF DE MISE AU POINT AUTOMATIQUE POUR UN APPAREIL OPTIQUE

(30) Priorität: 05.06.2001 DE 10127284
(43) Veröffentlichungstag der Anmeldung: 03.03.2004
(73) Patentinhaber: Carl Zeiss SMS GmbH, 07745 Jena (DE)
(72) Erfinder: CZARNETZKI, Norbert, 07747 Jena (DE); SCHERÜBL, Thomas, 07745 Jena (DE); MACK, Stefan, 79106 Freiberg (DE); KUROSAWA, Toshiro, Saitama-Shi Saitama Pref. (JP); HAGEMANN, Eckard, 07749 Jena (DE)
(86) Internationale Anmeldenummer: PCT/EP2002/006083
(87) Internationale Veröffentlichungsnummer: WO 2002/099501

(56) Entgegenhaltungen:
- WO-A-01/37025
- DE-A- 19 713 362
- US-A- 5 239 170
- US-A- 5 248 876

## Beschreibung

Die Erfindung bezieht sich auf eine Autofokussiereinrichtung für ein optisches Gerät, insbesondere für ein Mikroskop.

Autofokussiereinrichtungen werden überall dort eingesetzt, wo ein zu beobachtendes bzw. zu untersuchendes Objekt in eine möglichst genaue Position relativ zum Beobachtungsgerät, insbesondere in den Fokuspunkt des Beobachtungsgerätes, gebracht werden muß. Eine Vielzahl allgemein bekannter Autofokussierungseinrichtungen verwendet eine eigene Beleuchtüngsquelle, deren Licht auf das Objekt gerichtet und nach Wechselwirkung mit dem Objekt zum Zweck der Bestimmung eines Abstandes oder einer Abweichung von einer Referenzlage ausgewertet wird. In Kenntnis des Abstands bzw. der Abweichung von der Referenzlage kann eine automatische Lagekorrektur vorgenommen werden.

Aus dem Stand der Technik sind Autofokussiereinrichtungen für optische Geräte bekannt, die sich im wesentlichen hinsichtlich folgender Leistungsparameter unterscheiden:
- Auflösung in Richtung der optischen Achse (nachfolgend als z-Achse bezeichnet),
- Tiefe des Fang- bzw. Arbeitsbereichs,
- Möglichkeit der Generierung eines Richtungssignales für eine korrigierende Stellbewegung sowie
- erzielbare Meßgeschwindigkeit.

Die häufig zur Abstandsbestimmung genutzten Triangulationsverfahren erlauben zwar einen relativ großen Fangbereich, sind jedoch hinsichtlich der Auflösung in Richtung der z-Achse auf Größenordnungen von ca. 300 nm beschränkt und damit beispielsweise für die optische Inspektion von Halbleiterbauelementen (Wafern) ungeeignet, da dort Auflösungen in der Größenordnung von ca. 50 nm bei einem Fangbereich von mehreren µm benötigt werden.

Autofokussiereinrichtungen, die beispielsweise in CD-Playern verwendet werden, weisen zwar ebenfalls einen verhältnismäßig großen Fangbereich auf und erzielen auch noch eine hohe z-Auflösung, jedoch nur dann, wenn die anzumessende Oberfläche sehr gute Reflexionseigenschaften besitzt, da ansonsten insbesondere die z-Auflösung stark abfällt.

Bei den vorgenannten Autofokussiereinrichtungen wird in der Regel Laserlicht auf das zu untersuchende Objekt gerichtet. Unterscheidet sich jedoch das Wellenlängenspektrum des Hauptsystems des optischen Geräts sehr von demjenigen des Autofokussierungssystems, so resultieren daraus systematische Fehler bei der Scharfstellung, die unter anderem von den Materialeigenschaften und der Mikrostruktur, beispielsweise einer Oberflächenbeschichtung, des zu untersuchenden Objektes abhängig sind.

In US-A-5 248 876 ist ein konfokales Abbildungssystem beschrieben, das eine opake Maske mit einem Schlitz und einer Reihe von kleinen Sensoren oder eine opake Maske mit einem schiefen Muster von feinen Lochblenden (pinholes) und ein Feld von beabstandeten kleinen Sensoren in einem passenden Muster benutzt, um Daten zu erhalten, die ausreichen um ein vollständiges Bild zur Abbildung und/oder Untersuchung eines Objekts wie beispielsweise Elektronik mit einem einzelnen eindimensionalen Scan zu liefern. Das System liefert bei dem einzelnen eindimensionalen Scan des betrachteten Objekts gleichzeitig mehrere Bilder auf verschiedenen Höhen und liefert bei dem einzelnen eindimensionalen Scan des abzubildenden und/oder zu untersuchenden Objekts auch gleichzeitig in verschiedenen Spektralbändern aufgenommene Bilder. Die relative Höhe oder Tiefe der verschiedenen Bilder kann dadurch geändert werden, daß einfach die Neigung zwischen dem konfokalen Abbildungssystem und einer Bahn des bei dem eindimensionalen Scan abzubildenden und/oder zu untersuchenden Objekts eingestellt wird. Das optische konfokale Abbildungssystem erfordert keine beweglichen Teile und die einzigen beweglichen Teile dienen zur motorischen Bewegung des abzubildenden und/oder zu untersuchenden Objekts entlang des Weges. Bei einer Anordnung des konfokalen Abbildungssystems kann eine Farbabbildung und/oder - untersuchung des Objekts durchgeführt werden. Bei einer anderen Anordnung des konfokalen Abbildungssystems kann gleichzeitig eine Hell- und eine Dunkelfeldabbildung und/oder -untersuchung des Objekts durchgeführt werden.

Der Erfindung liegt die Aufgabe zugrunde eine Autofokussiereinrichtung zu schaffen, die bei einem einfachen Aufbau eine hohe Fokussiergenauigkeit und eine hohe Fokussiergeschwindigkeit erlaubt.

Die Aufgabe wird gelöst durch eine Autofokussiereinrichtung mit den Merkmalen des Anspruchs 1 oder eine Autofokussiereinrichtung mit den Merkmalen des Anspruchs 3.

Diese Aufgabe wird also bei einer Autofokussiereinrichtung, bei der Beleuchtungslicht durch eine Abbildungsoptik hindurch auf ein Objekt gerichtet ist, das sich in einer zur optischen Achse der Abbildungsoptik zumindest etwa senkrechten Richtung bewegt, insbesondere dadurch gelöst, daß im Beleuchtungsstrahlengang zwischen Beleuchtungsquelle und Abbildungsoptik eine Blendeneinrichtung angeordnet ist mit mindestens einer Blendenöffnung, die in einer mit der Bewegungsrichtung des Objektes gleichsinnigen Richtung ausgedehnt ist, im Meßstrahlengang eine Empfangseinrichtung für das von einem Meßort am Objekt kommende Meßlicht vorhanden ist mit einzelnen, gesondert auswertbaren Empfangsbereichen, die in einer mit der Bewegungsrichtung des Objektes gleichsinnigen Richtung aneinandergereiht sind, die Blendenöffnung gegen die optische Achse des Beleuchtungsstrahlenganges oder die aneinandergereihten Empfangsbereiche gegen die optische Achse des Meßstrahlenganges um einen Winkel 0°<α<90° geneigt sind, wodurch das Bild der Blendenöffnung zu den Empfangsbereichen geneigt ist und dabei Empfangseinrichtung und Blendenöffnung so zueinander positioniert sind, daß charakteristische Meßwerte dann an den Empfangsbereichen gemessen werden, wenn sich der Meßort in oder nahe der Fokusposition befindet, eine Synchronsteuerung vorhanden ist, welche das sequentielle Auslesen der Meßergebnisse an den Emfangsbereichen veranlaßt, wobei sich zur Zeit (t₁) des Auslesens des Empfangsbereichs (e₁) der Meßort an einer Position (p₁) befindet, zur Zeit (t₂) des Auslesens des Empfangsbereiches (e₂) der Meßort an einer Position (p₂) befindet und so weiter und eine Auswerteeinrichtung vorgesehen ist, welche die an den Emfangsbereichen ausgelesenen Meßwerte mit gespeicherten Sollwerten vergleicht und daraus Signale für das optische Gerät generiert.

Weiter ist eine Einrichtung zum kontinuierlichen Vorschub eines oder mehrerer Objekte vorhanden, die mit der Synchronsteuerung gekoppelt ist. Dabei soll die vorschubrichtung mit der optischen Achse der Abbildungsoptik einen rechten Winkel einschließen.

Bevorzugt ist vorgesehen, daß die Auswerteeinrichtung zum Generieren von Stellsignalen für eine Stelleinrichtung ausgebildet ist, durch welche im Falle einer Abweichung zwischen den ausgelesenen Meßwerten und den gespeicherten Sollwerten die Bewegungsrichtung des Objektes in die Fokusebene der Abbildungsoptik veranlaßt wird.

Die Abbildungsoptik kann aber auch zur Ermittlung anderweitiger Befehlssignale für das optische Gerät ausgebildet sein, beispielsweise zur Inbetriebnahme einer Bildaufnahmeeinrichtung und ähnlich.

Aufgrund der Neigung der Blendeneinrichtung zu der optischen Achse des Beleuchtungslichtes oder der Neigung der Empfangseinrichtung zur optischen Achse des Meßlichtes ergibt sich an der Empfangseinrichtung eine sinngemäß in Bewegungsrichtung des Objektes verlaufende Intensitätsverteilung, die für die Position des Meßortes relativ zur Abbildungsoptik charakteristisch ist.

Die Bewegungsbahn des Meßortes schneidet eine gedachte Ebene, deren Lage dadurch bestimmt ist, daß sie - als Spiegel in das optische System eingefügt - eine optische Konjugation von Bereichen auf der Blendeneinrichtung mit zugeordneten Emfangsbereichen bewirkt und an den Emfangsbereichen die charakteristischen Meßwerte dann ablesbar sind, wenn der sich bewegende Meßort diese gedachte Ebene berührt.

Dadurch erlaubt es die erfindungsgemäße Autofokussiereinrichtung, mittels einer einzigen Spaltöffnung oder einer Reihe von Einzelblenden mehrfach denselben Meßort an einem Objekt anzumessen, so daß für die Bewertung der Fokuslage mehrere Informationen zur Verfügung stehen. Solche Mehrfachmessungen sind insbesondere dann vorteilhaft, wenn die zu untersuchenden Objekte eine stark zerklüftete Oberflächenstrukturierung aufweisen.

Die bisher beschriebene erfindungsgemäße Anordnung ist bevorzugt für die Erfassung von Meßwerten bezüglich der Fokuslage eines sich bewegenden Objektes bzw. Meßortes geeignet; eine solche Betriebsweise, bei der sich Abbildungsoptik und Objekt relativ zueinander bewegen, soll hier als "dynamische" Betriebsweise bezeichnet werden. Dabei kann die Bewegung beispielsweise eine kontinuierliche oder auch eine schrittweise Vorschubbewegung des Objektes sein.

Dagegen ist für eine "statische" Betriebsweise, bei der Bildinformationen von Meßorten an Objekten gewonnen werden sollen, die sich in relativer Ruhe zu der Abbildungsoptik befinden, die nachfolgend beschriebene erfindungsgemäße Anordnung besser geeignet.

Bei dieser Autofokussiereinrichtung ist das Beleuchtungslicht durch eine Abbildungsoptik hindurch auf die Oberfläche eines ruhenden Objektes gerichtet; im Strahlengang zwischen Beleuchtungsquelle und Abbildungsoptik ist eine Blendeneinrichtung mit mindestens einer Blendenöffnung vorgesehen, die in einer Vorzugsrichtung V ausgedehnt ist; eine Empfangseinrichtung für das vom Meßort kommende Meßlicht ist vorhanden, die gesondert auswertbare, in einer mit der Vorzugsrichtung V korrespondierenden Richtung V' aneinandergereihte Empfangsbereiche aufweist; weiter schließen die Blendenöffnung mit der optischen Achse des Beleuchtungsstrahlenganges oder die aneinandergereihten Empfangsbereiche mit der optischen Achse des Meßstrahlenganges einen Winkel 0°<α<90° ein, so daß das Bild der Blendeneinrichtung um den Winkel α geneigt auf die Empfangsbereiche fällt und auf einen der Empfangsbereiche Meßlicht mit höchster Intensität dann trifft, wenn ein zugeordneter Teilbereich der Blendenöffnung mit diesem Empfangsbereich konjugiert; eine Zustelleinrichtung zur Veränderung des Abstandes des Objektes von der optischen Achse ist vorhanden und eine Auswerteeinrichtung ist vorgesehen, die eine Information über das Erreichen der Fokuslage dann ausgibt, wenn im Verlaufe der Veränderung des Abstandes das Meßlicht an den Empfangsbereichen Meßwerte verursacht, die vorgegebenen. Vergleichswerten entsprechen.

Auch hier sind die charakteristischen Meßwerte dann ablesbar, wenn sich ein Meßort in einer gedachten Ebene befindet, deren Lage dadurch bestimmt ist, daß sie - als Spiegel in das optische System eingefügt - eine optische Konjugation von Bereichen auf der Blendeneinrichtung mit zugeordneten Emfangsbereichen bewirkt.

Damit kann eine Änderung der Lage eines ausgewählten. Meßortes relativ zum Fokuspunkt der Abbildungsoptik veranlaßt werden, bis dieser Meßort die Fokusposition erreicht hat.

Diese Autofokussiereinrichtung kann weiter' so ausgestaltet sein, daß die Auswerteeinrichtung zunächst denjenigen Empfangsbereich ermittelt, auf den bei einem aktuellen Abstand z der Objektoberfläche von der Abbildungsoptik die maximale Meßlichtintensität trifft. Dann wird die Differenz ermittelt zwischen der Position dieses Empfangsbereiches und der Position eines vorgegebenen Empfangsbereiches, auf den die maximale Meßlichtintensität nur dann trifft, wenn der Abstand z dem Fokusabstand entspricht. Aus dieser Differenz wird nun eine Stellgröße generiert, die einem Weg für eine Zustellbewegung entspricht.

Ist die Zustelleinrichtung beispielsweise mit einem elektomotorischen Antrieb ausgestattet, kann mittels der Stellgröße eine Änderung des Abstandes z so weit veranlaßt werden, bis die maximale Meßlichtintensität auf den vorgegebenen Empfangsbereich trifft und damit die Fokuslage erreicht und die Fokussierung vollzogen ist.

Die Empfangseinrichtung kann sowohl bei der Autofokussiereinrichtung für die "dynamische" als auch für die "statische" Betriebsweise als Empfängerzeile ausgebildet sein, die aus einer Vielzahl von nebeneinander aufgereihten Einzelsensoren besteht, wobei jeweils ein Empfangsbereich einem Einzelsensor entspricht. In diesem Fall kann die Blendeneinrichtung vorteilhaft so gestaltet und in den Strahlengang gestellt sein, daß sie eine "Beleuchtungslinie" erzeugt, die in Längsrichtung auf die Empfängerzeile fällt und diese überdeckt.

Funktionswesentlich bei der erfindungsgemäßen Anordnung ist, daß entweder die Blendenöffnung oder die Empfangseinrichtung mit der jeweiligen optischen Achse des Strahlenganges, in den sie eingeordnet ist, einen Winkel 0°<α<90° einschließt. Es ist auch denkbar, sowohl die Blendeneinrichtung als auch die Empfangseinrichtung gegen den Strahlengang zu neigen, wobei es jedoch erforderlich ist, für das Bild der Blendeneinrichtung als auch das Bild der Empfangseinrichtung abweichende Neigungswinkel vorzugeben.

Bewährt hat sich beispielsweise eine Ausgestaltung, bei der die Blendenöffnung senkrecht zur optischen Achse des Beleuchtungsstrahlenganges ausgerichtet ist, während die Empfängerzeile mit der optischen Achse des Meßstrahlenganges einen Winkel α=45° einschließt.

Die Blendenöffnung kann beispielsweise als Spaltöffnung ausgebildet sein, wobei jedem Einzelsensor ein Abschnitt der Spaltöffnung zugeordnet ist. Alternativ hierzu kann die Blendenöffnung aber auch als Lochblende mit einer Vielzahl von nebeneinander aufgereihten Einzellöchern ausgebildet sein, wobei jedem Einzelsensor beispielsweise eine Einzelblende als Teilbereich zugeordnet ist.

Als Empfängerzeile kann eine CCD-Zeile vorgesehen sein, wobei jeweils ein oder mehrere Pixel der CCD-Zeile einem Einzelsensor bzw. einem Empfangsbereich entspricht.

Mit der Autofokussiereinrichtung in den bisher beschriebenen.Ausführungsformen lassen sich bei Anwendungen im Zusammenhang mit Mikroskopen Auflösungen in Fokussierrichtung in der Größenordnung von 50 nm erreichen. Dabei ist ein Fangbereich, in dem ein aussagekräftiges Signal erfaßt wird, in der Größenordnung von mehreren µm möglich.

In Ausgestaltungen der Autofokussiereinrichtung, die besonderen Anwendungen angepaßt sind, kann die Blendeneinrichtung mehrere parallel ausgerichtete Spaltöffnungen oder Reihen aus Einzelblenden aufweisen und dadurch mehrere "Beleuchtungslinien" erzeugen, die auf die Empfangseinrichtung fallen. Die Empfangseinrichtung kann für diese Fälle mehrere parallel zueinander ausgerichtete Empfängerzeilen mit jeweils einer Vielzahl nebeneinander aufgereihten Einzelsensoren aufweisen, wobei zur Auswertung wiederum wie bereits dargestellt jeweils ein Einzelsensor einem Teilbereich der Spaltöffnungen bzw. einer der Einzelblenden zugeordnet sein kann.

Auch ist es denkbar, die Empfangseinrichtung in Form eines positionsempfindlichen Flächenempfängers auszubilden und jeweils eine Teilfläche des Flächenempfängers einem Teilbereich einer Spaltöffnung bzw. einer Einzelblende optisch zuzuordnen.

Prinzipiell ist es möglich, zur Bewertung der Fokuslage unmittelbar auf die gemessenen Intensitäten bzw. Helligkeiten zurückzugreifen und daraus beispielsweise ein Signal zu gewinnen, mit dem das Maximum der Intensitätsverteilung bestimmbar ist. Denkbar ist es allerdings auch, anstelle der lokalen Intensitäten lokale Kontrastwerte zu messen und der Weiterverarbeitung zugrunde zu legen.

Die erfindungsgemäße Autofokussiereinrichtung kann beispielsweise als separates optisches System in ein Mikroskop implementiert werden, wobei das optische System für die Autofokussierung und das Hauptsystem des Mikroskops in getrennten Baugruppen ausgeführt sind.

Vorteilhafter dagegen ist es jedoch, funktionswesentliche optische Baugruppen sowohl für die Autofokussierung als auch für den Mikroskopstrahlengang gemeinsam zu nutzen, indem beispielsweise die Blende der Autofokussiereinrichtung im Beleuchtungsstrahlengang zwischen Beleuchtungsquelle und Abbildungsoptik eines Mikroskops angeordnet ist, nämlich etwa im Randbereich einer Leuchtfeldblende. In diesem Fall werden Beleuchtungsquelle und die Abbildungsoptik mehrfach genutzt, wodurch eine Verminderung der Anzahl der Systemkomponenten und insbesondere eine kompakte Bauweise erzielt wird.

Die gemeinsame Verwendung einer Beleuchtungsquelle hat den weiteren Vorteil, daß die Autofokussiereinrichtung im gleichen Wellenlängenbereich wie das optische Hauptsystem arbeitet. Damit werden systematische Fehler, welche ihre Ursache in Wellenlängenunterschieden haben, vermieden und somit eine besonders hohe Fokussiergenauigkeit gewährleistet.

Die Erfindung wird nachfolgend anhand eines Ausführungsbeispieles näher erläutert. Die zugehörigen Zeichnungen zeigen in:
- Fig.1: die schematische Darstellung einer Autofokussiereinrichtung, die insbesondere für die "dynamische" Betriebsweise, d. h. mit bewegten Objekten geeignet ist,
- Fig.2: eine Intensitätsverteilung für einen Meßort, der senkrecht zur optischen Achse der Autofokussiereinrichtung bewegt worden ist,
- Fig.3: die beispielhafte Darstellung einer Blendeneinrichtung mit mehreren Spaltöffnungen,
- Fig.4: die beispielhafte Darstellung einer Blendeneinrichtung mit mehreren Reihen aus Einzelblenden,
- Fig.5: die schematische Darstellung einer Autofokussiereinrichtung, die insbesondere für die "statische" Betriebsweise, d. h. mit unbewegten Objekten geeignet ist.

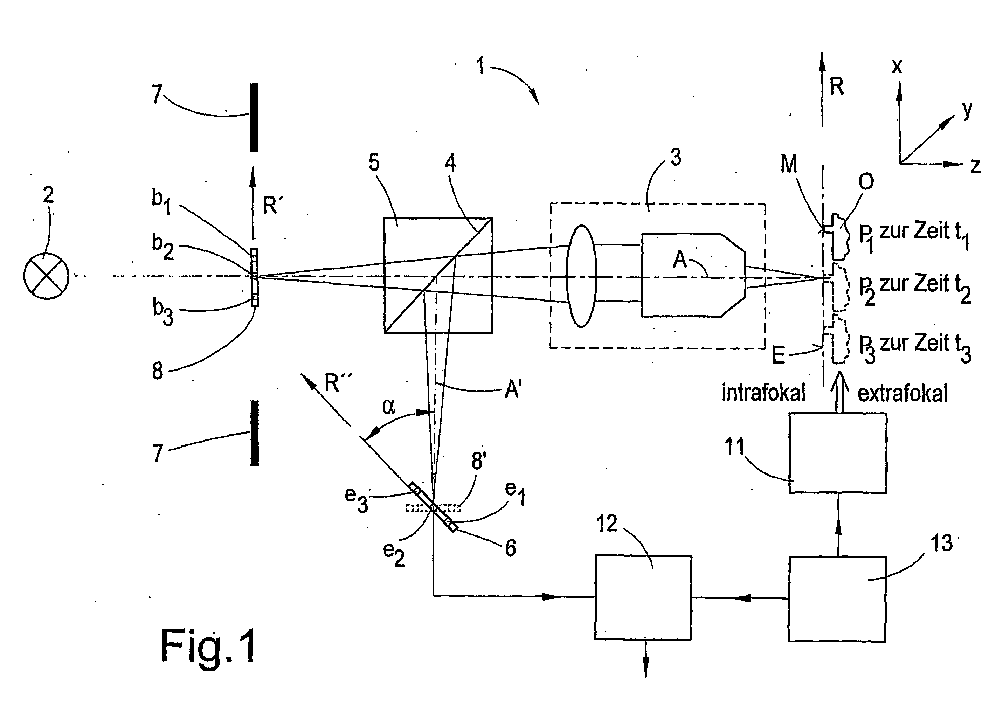

Das Ausführungsbeispiel in Fig.1 zeigt eine Autofokussiereinrichtung 1, die beispielsweise in ein Mikroskop, dessen Aufbau als bekannt vorausgesetzt werden kann, integriert ist. Das Mikroskop sei zur Inspektion von Oberflächenstrukturen an Wafern vorgesehen. Selbstverständlich kann ein Mikroskop mit einer derartigen Autofokussiereinrichtung 1 auch zur Untersuchung anderer Objektoberflächen, die eine ähnlich feine Oberflächenstrukturierung aufweisen, genutzt werden.

Die Autofokussiereinrichtung 1 umfaßt eine Beleuchtungsquelle 2, die sowohl eine sepärate Quelle oder auch die Beleuchtungsquelle des Mikroskops sein kann und die beispielsweise Licht im sichtbaren Spektralbereich abgibt.

Weiterhin ist eine Abbildungsoptik 3 vorgesehen, die wiederum in vorteilhafter Weise mit der Abbildungsoptik des Mikroskops identisch ist und durch die hindurch das Licht der Beleuchtungsquelle 2 auf einen Meßort M an dem Objekt O gerichtet ist.

Bei dem hier beschriebenen Ausführungsbeispiel wird das Objekt O kontinuierlich bewegt, wodurch der Meßort M seine Position relativ zur optischen Achse der Abbildungsoptik 3 stetig ändert und sich demzufolge zu unterschiedlichen Zeiten t₁, t₂... tₙ an unterschiedlichen Positionen p₁, p₂... pₙ befindet. Diese Art der Nutzung soll deshalb als "dynamische" Betriebsweise bezeichnet werden.

Das vom Objekt O reflektierte Licht gelangt zur Abbildungsoptik 3 zurück und wird nach Durchgang durch die Abbildungsoptik 3 von der Teilerschicht 4 eines Strahlteilers 5 zu einer Empfängerzeile 6 hin umgelenkt. Das Prinzip der Strahlteilung bzw. Ausblendung von Strahlungsanteilen ist an sich bekannt und muß deshalb hier nicht näher erläutert werden.

In dem Strahlengang zwischen der Beleuchtungsquelle 2 und dem Strahlteiler 5 befindet sich beispielsweise eine zur Mikroskopanordnung gehörende Leuchtfeldblende 7, in deren Bereich erfindungsgemäß eine Spaltblende 8, hier mit nur einer Spaltöffnung, angeordnet ist.

In Fig.1 ist die Spaltblende 8 der Einfachheit halber in einer koaxialen Position gezeichnet, damit das Prinzip der erfindungsgemäßen Autofokussierung zeichnerisch übersichtlich darstellbar ist; vorteilhafter dagegen ist es, die Spaltblende 8 außermittig an der Peripherie der Leuchtfeldblende 7 zu positionieren, damit der Beleuchtungsstrahlengang der Mikroskopanordnung, in die die Autofokussiereinrichtung 1 mit eingeordnet ist, nicht in unzulässigem Maße beeinträchtigt wird.

Mit der Spaltblende 8 wird ein Strahlungsanteil des von der Beleuchtungsquelle 2 kommenden Lichtes zu einer "Beleuchtungslinie" geformt, deren Zweck im Zusammenhang mit der Ausrichtung der Empfängerzeile 6 steht und nachfolgend näher erläutert wird.

Die Spaltöffnung der Spaltblende 8 und die Empfängerzeile 6 sind in bezug aufeinander so ausgebildet, daß die mit der Spaltöffnung erzeugte "Beleuchtungslinie" in Längsrichtung auf die Empfängerzeile 6 fällt und diese zumindest im wesentlichen überdecken würde, wenn anstelle des Objektes eine entsprechend positionierte und zur Ebene E gekippte Spiegelebene gesetzt würde. Das Bild 8' der Spaltblende 8, wie es sich im Falle eines Spiegels in der Ebene E ergeben würde, ist in Fig.1 angedeutet.

Die Empfängerzeile 6, die beispielsweise aus einer Vielzahl von nebeneinander aufgereihten Einzelsensoren, sogenannten "Pixeln" besteht, ist bezüglich des Bildes der Spaltblende 8 so geneigt, daß sie mit diesem einen Winkel α=45° einschließt.

Spaltblende 8 und Empfängerzeile 6 sind weiterhin in bezug aufeinander so positioniert, daß das von der Oberfläche des Objektes O zurückgeworfene Licht der "Beleuchtungslinie" genau dann mit maximaler Helligkeit auf den mittleren Empfangsbereich e₂ der Empfängerzeile 6 trifft bzw. im mittleren Empfangsbereich e₂ eine Lichtstruktur mit höchstem Kontrast erzeugt, wenn die Bewegungsbahn des Meßortes M in der Position p₂ die gedachte Ebene schneidet, die eine optische Konjugation von Bereichen auf der Blendeneinrichtung mit zugeordneten Emfangsbereichen bewirkt.

Dies dient als Kriterium dafür, daß sich der Meßort M im Fokus der Abbildungsoptik 3 befindet. Dabei kann der Empfangsbereich e₂ aus mehreren, bevorzugt jedoch aus einem der Pixel der Emfpängerzeile 6 gebildet sein.

Befindet sich der Meßort M in der Position p₁, trifft Licht aus dem Teilbereich b₁ der Spaltblende 8 mit vergleichsweise geringerer Helligkeit auf den Empfangsbereich e₁ der Empfängerzeile 6 bzw. erzeugt dort eine Lichtstruktur mit vergleichsweise geringerem Kontrast als auf dem Empfangsbereich e₂, da der Empfangsbereich e₁ aufgrund der Neigung der Empfängerzeile 6 gegen die Lichteinfallsrichtung nicht mit der Fokusposition kommuniziert. Mit anderen Worten: Der Teilbereich b₁ der Spaltblende 8 wird defokussiert auf den Empfangsbereich e₁ der Empfängerzeile 6 (beispielsweise einem Pixel der Empfängerzeile 6) abgebildet.

In derselben Konstellation wird für die Position p₃ ebenso vom Teilbereich b₃ der Spaltöffnung auf dem Empfangsbereich e₃ der Empfängerzeile 6 eine Lichtstruktur mit geringerer Helligkeit bzw. geringerem Kontrast erzeugt als dies im Vergleich zur Position p₂ auf dem Empfangsbereich e₂ der Fall ist, da wegen der Neigung der Empfängerzeile 6 auch der Teilbereich b₁ defokussiert auf den Empfangsbereich e₁ der Empfängerzeile 6 abgebildet wird.

Mit anderen Worten: Aufgrund der Schrägstellung der Empfängerzeile 6 relativ zur Spaltblende 8 existiert also für jeden Teilbereich der Blende eine z-Lage eines ebenen, senkrecht zur optischen Achse der Abbildungseinrichtung ausgerichteten Objektes, bei der dieser Teilbereich konjugiert zu einem entsprechenden Empfangsbereich auf der Empfängerzeile ist.

Der Unterschied bei der defokussierten Abbildung der Teilbereiche b₁ und b₃ der Spaltblende 8 auf die Empfangsbereiche e₁ bzw. e₂ der Empfängerzeile 6 besteht, wie aus Fig.1 erkennbar ist, darin, daß der Teilbereich b₁ extrafokäl und der gegenüberliegende Teilbereich b₂ intrafokal defokussiert abgebildet wird. Bei einer entgegengesetzten Neigung der Empfängerzeile 6, die ebenfalls denkbar ist, wäre dies umgekehrt. Die Begriffe extrafokal und intrafokal beziehen sich hier auf die Defokussierung.

Die Spaltblende 8 und die Empfängerzeile 6 sind also so zueinander angeordnet, daß jeweils ein Teilbereich b₁, b₂ bzw. b₃ der Spaltblende 8 auf den korrespondierenden Empfangsbereich e₁,e₂ bzw. e₃ der Spaltblende 8 abgebildet wird. Aufgrund der Neigung der Empfängerzeile 6 ergeben sich jedoch für die Empfangsbereiche e₁,e₂ bzw. e₃ unterschiedliche optische Weglängen zu dem Meßort M, was zur Folge hat, daß in Abhängigkeit von der axialen Position des Meßortes M in Relation zum Fokusort der Abbildungsoptik 3 jeweils lediglich ein Teilbereich b₁,b₂ bzw. b₃ der Spaltblende 8 zu einem Empfangsbereich e₁,e₂ bzw. e₃ der Empfängerzeile optisch konjugiert ist. Es werden hierbei immer nur die einander zugeordneten Teilbereiche, Empfangsbereiche und Positionen betrachtet, d.h. es wird lediglich das Licht bewertet, das vom Meßort M kommt.

Dabei entspricht die Breite des Spaltes der Spaltblende 8 zumindest etwa der Größe der Pixel der Empfängerzeile 6, so daß sich senkrecht zur Zeilenrichtung eine konfokaloptische Bedingung ergibt. Daraus folgt, daß die in Empfangsbereichen e₁ und e₃ pro Pixel gemessene Lichtintensität geringer sein muß als die im Empfangsbereich e₂, pro Pixel gemessene Lichtintensität, bezogen auf die Positionen p₁, p₂, p₃.

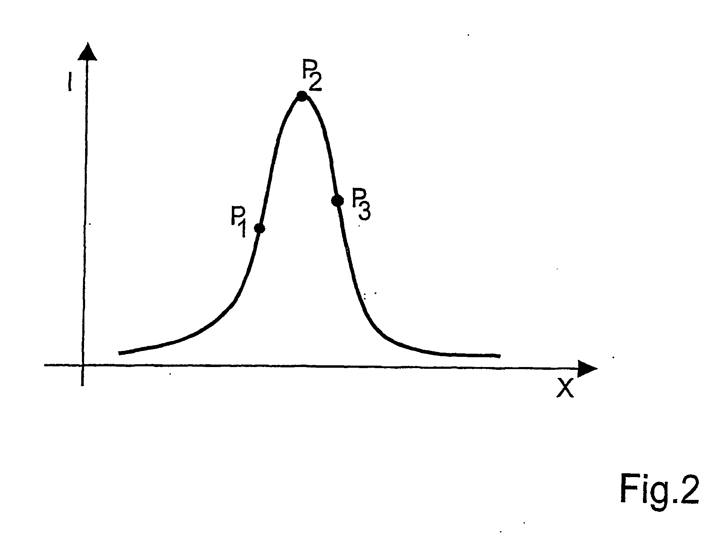

Es sei ausdrücklich betont, daß die Teilbereiche b₁, b₂, b₃ und die Empfangsbereiche e₁, e₂, e₃ nur beispielhaft zur Erläuterung ausgewählt worden sind. Es läßt sich bei Auswertung über die gesamte Empfängerzeile hinweg eine Intensitätskurve ermitteln, wie sie in Fig.2 dargestellt ist.

Im folgenden sei nun angenommen, daß das zu untersuchende Objekt O bewegt wird. Die Bewegungsrichtung R soll beispielhaft mit der Koordinatenrichtung X übereinstimmen, die senkrecht zur optischen Achse A ausgerichtet ist und hier in der Zeichenebene der Fig.1 liegt.

Das Objekt O weise einen Vorsprung auf, auf dem sich der zu beobachtende Meßort M befinde - beispielsweise eine Leiterbahn.

Beispielhaft werden nachfolgend nun die Positionen p₁, p₂ und p₃ betrachtet, bei denen sich der Meßort M während der Bewegung des Objektes O zu den Zeiten t₁, t₂, t₃ befindet.

Die Position p₁ des Meßortes M zum Zeitpunkt t₁ entspricht der Position des Teilbereiches b₁ der Spaltblende 8 und der Position des Empfangsbereiches e₁ auf der Empfängerzeile 6; demzufolge wird das in dieser Position vom Meßort M reflektierte Licht extrafokal defokussiert auf den Empfangsbereich e₁ der Empfängerzeile 6 abgebildet.

Nach der Weiterverschiebung des Objektes O erreicht der Meßort M die Position p₂. Jetzt sind Empfangsbereich e₂ und Teilbereich b₂ zueinander konjugiert. Die Einzelsensoren im Empfangsbereich e₂ der Empfängerzeile 6 signalisieren maximale Meßlichtintensität und geben damit Auskunft darüber, daß sich der Meßort M in Fokusposition befindet. Durch die Auswerteeinrichtung 12 wird die Position p₂ die Fokusposition zugeordnet, da zum Zeitpunkt t₂ im Empfangsbereich e₂ das Maximum gemessen wird.

Nach einer weiteren Verschiebung in x-Richtung gelangt der Meßort M zur Position p₃. Hier wird der Teilbereich b₃ der Spaltblende 8 intrafokal defokussiert auf den Empfangsbereich e₃ der Empfängerzeile 6 abgebildet.

Die von den den Positionen p₁, p₂ und p₃ zugeordneten Pixeln der Empfängerzeile 6 gemessenen Intensitäten sind abhängig von der jeweils erreichten Position des Meßortes M bei Bewegung in Richtung x und in Fig.2 als Intensitätskurve dargestellt. Jedem Pixel der Empfägerzeile 6 und somit dessen Intensitätswert läßt sich eine x-Position des Meßortes M zuordnen. Dabei korreliert die x-Position wie oben dargestellt mit den jeweiligen Teilbereichpaaren b₁/e₁, b₂/e₂ bzw. b₃/e₃ der Spaltblende 8 und der Empfängerzeile 6.

In Fig.1 ist eine Verschiebeeinrichtung 11 angedeutet, die beispielsweise mit einem Tisch gekoppelt ist (zeichnerisch nicht dargestellt), auf dem das Objekt O abgelegt ist.

Eine Synchronsteuerung 13, die sowohl mit der Auswerteeinrichtung 12 als auch mit der Verschiebeeinrichtung 11 verbunden ist, sorgt dafür, daß jeweils zu den Zeitpunkten t₁, t₂, t₃ bzw. dann, wenn sich der Meßort M an den Positionen p₁, p₂, p₃ befindet, die Meßwerte von den entsprechenden Empfangsbereichen ausgelesen werden, so daß in der Auswerteeinrichtung 12 die Zuordnung eines jeden Meßwertes zu einer Position des Meßortes vorgenommen werden kann.

Die in Fig.2 gezeigte Intensitätsverteilung über der x-Achse entspricht, abgesehen von einem Skalierungsfaktor, der Intensitätsverteilung, wie sie sich an der Empfängerzeile 6 entlang der Neigungsrichtung einstellt, falls das Objekt O eine spiegelnde Fläche in einer Ebene, die die Bewegungsbahn des Meßortes M beinhaltet.

Bei typischen Pixelgrößen eines Zeilenempfängers von ca. 10µm und einem Neigungswinkel von α=45° ergibt sich bei einer 80-fachen Vergrößerung und üblichen Zwischenbildgrößen eine axiale Abtastrate der Intensitätskurven von ca. 5nm bezüglich des Objektraumes.

Der Erläuterung des vorbeschriebenen Ausführungsbeispiels wurde die Ausführung der Blendeneinrichtung als Spaltblende mit nur einer Spaltöffnung und die Ausführung der Empfangseinrichtung mit einer Empfängerzeile zugrunde gelegt.

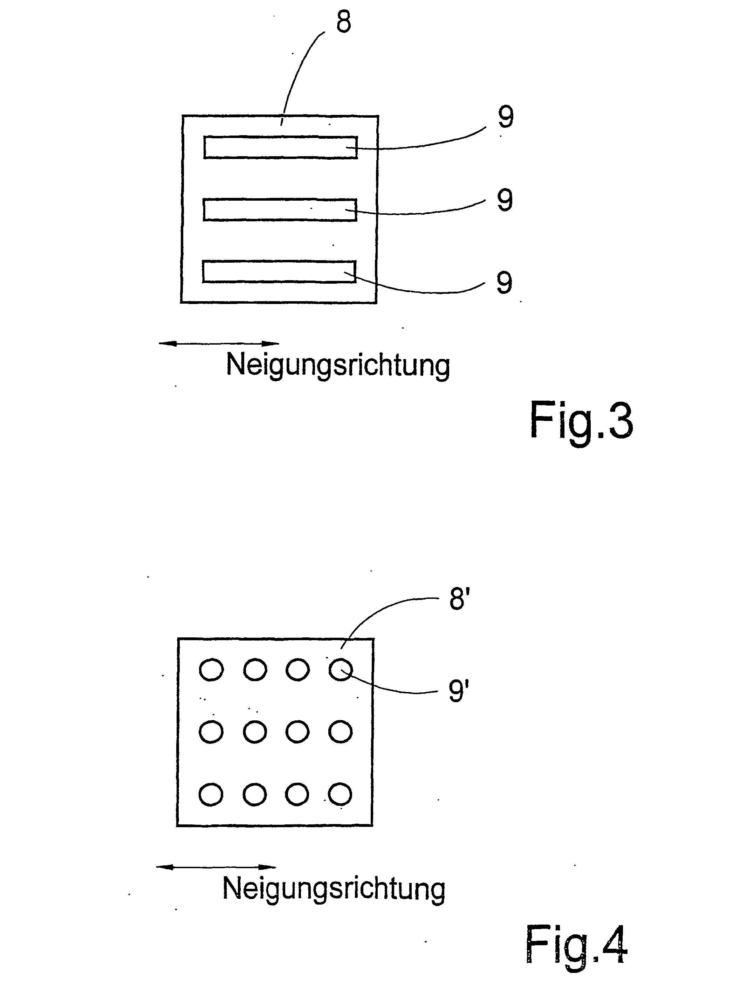

Denkbar dagegen sind aber auch Ausführungen, bei denen die Blendeneinrichtung als Spaltblende 8 mit mehreren nebeneinander liegenden Spaltöffnungen 9 ausgebildet ist, wie dies in Fig.3 dargestellt ist. Im Zusammenhang damit können Empfangseinrichtungen genutzt werden, bei denen alternativ mehrere Zeilen aus Einzelsensoren nebeneinander oder flächig verteilte Einzelsensoren vorhanden sind oder die an sich als Flächendetektoren ausgebildet sind.

Auch kann die Blendeneinrichtung aus einer Vielzahl von Einzelblenden bestehen, die, wie in Fig.4 gezeigt, flächig verteilt sind. Dabei kann jede Einzelblende 9' genau einem Pixel der Empfangseinrichtung zugeordnet sein, wodurch sich eine besonders hohe Auflösung für die Autofokussiereinrichtung ergibt.

Abschließend sei noch ein weiteres Ausführungsbeispiel für die erfindungsgemäße Autofokussiereinrichtung angegeben, das insbesondere für die "statische" Betriebsweise, d. h. zur Autofokussierung bei Messungen an unbewegten Objekten geeignet ist.

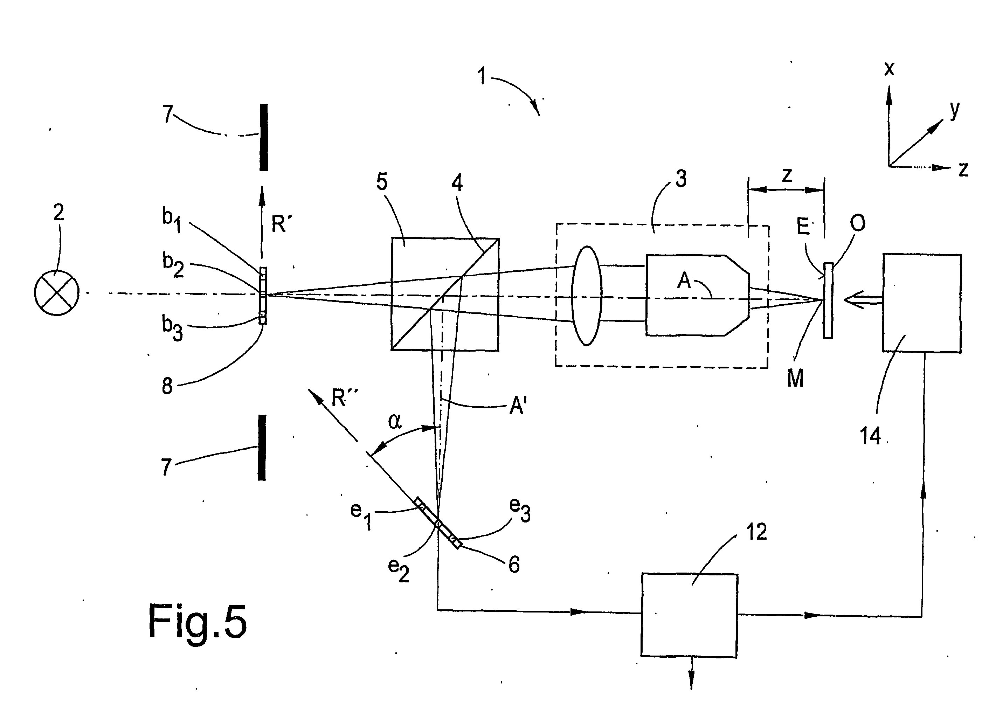

In diesem Ausführungsbeispiel, das nachfolgend anhand Fig.5 erläutert wird, ist das von einer Beleuchtungsquelle 2 abgestrahlte Beleuchtungslicht durch eine Abbildungsoptik 3 hindurch auf die Oberfläche eines ruhenden Objektes O gerichtet und im Strahlengang zwischen Beleuchtungsquelle 2 und Abbildungsoptik 3 ist eine Spaltblende 8 vorgesehen.

Weiter ist eine Empfängerzeile 6 für das vom Meßort M kommende Meßlicht vorhanden, die gesondert auswertbare, in einer mit der Ausdehnungsrichtung der Blendenöffnung korrespondierenden Richtung aneinandergereihte Empfangsbereiche e₁, e₂...eₙ aufweist.

Die aneinandergereihten Empfangsbereiche e₁, e₂...eₙ schließen mit der optischen Achse A' des Meßstrahlenganges beispielhaft einen Winkel α=45° ein, und Empfangseinrichtung und Blendeneinrichtung sind so zueinander positioniert, daß das Meßlicht auf einem vorgegebenen Empfangsbereich e₂ eine maximale Helligkeit dann erzeugt, wenn der entsprechende Teilbereich b₂ der Spaltöffnung mit dem Empfangsbereich e₂ optisch konjugiert ist.

Eine Zustelleinrichtung 14, die mit einer nicht dargestellten Objektauflage verbunden ist, dient zur Veränderung des Abstandes z des Objektes O in Richtung der optischen Achse A. Schließlich ist auch hier eine Auswerteeinrichtung 12 vorgesehen, die eine Information über das Erreichen der Fokuslage dann ausgibt, wenn beispielhaft bei Veränderung des Abstandes z das Meßlicht an dem ausgewählten Empfangsbereich e₂ ein maximales Helligkeitssignal verursacht.

Ändert sich bei Verstellung mittels Zustelleinrichtung 14 der Abstand z, so ergibt sich aufgrund der Neigung der Empfängerzeile 6 eine Verschiebung des Maximums entlang der Empfängerzeile 6. Die Position des Maximums der Kurve in Fig.2 ist demzufolge ein Maß für den Abstand des Meßortes M von der Abbildungsoptik 3.

Mit der Auswerteeinrichtung 12 wird nun zunächst derjenige der Empfangsbereiche (e₁, e₂...eₙ) ermittelt, auf den bei einem aktuellen Abstand z der Oberfläche des Objektes O von der Abbildungsoptik 3 die maximale Meßlichtintensität trifft. Dann wird die Differenz zwischen der Position des so ermittelten Empfangsbereiches e₁, e₂...eₙ und der Position des vorgegebenen Empfangsbereiches e₂ gebildet, auf den die maximale Meßlichtintensität nur trifft, wenn sich die Objektoberfläche in der Fokusebene der Abbildungsoptik 3 befindet.

Nachfolgend wird in der Auswerteeinrichtung 12 aus dieser Differenz eine Stellgröße (S) generiert und an den Antrieb einer Zustelleinrichtung 14 ausgegeben, und so in Abhängigkeit von der Stellgröße (S) eine Änderung des Abstandes (z) veranlaßt, bis die maximale Meßlichtintensität auf den vorgegebenen Empfangsbereich e₂ trifft und sich somit die Objektoberfläche in der Fokusebene befindet.

Verfahren und Anordnungen, die das Vergleichen der von der Empfängerzeile 6 gewonnenen Signale mit gespeicherten Sollwerten, die Differenzbildung und Umsetzung des Vergleichsergebnisses in ein Stellsignal und dessen Ausgabe an eine Stelleinrichtung mit Stellorganen ermöglichen; sind aus dem Stand der Technik bekannt und sollen deshalb hier nicht näher erläutert werden.

Anstelle der unmittelbaren Weiterverwendung der gemessenen Intensitäten können sowohl bei der "dynamischen" als auch bei der "statischen" Betriebsweise zur Bewertung der Fokuslage aus den Intensitätswerten zunächst weitere Vergleichsgrößen ermittelt werden. Beispielsweise kann aus den Intensitäten zunächst eine Ausgleichskurve berechnet werden, deren Maximum auch zwischen den Meßpositionen liegen kann.

Im letzteren Fall werden beispielsweise mit nur einer Messung die Intensitätswerte der einzelnen Empfangsbereiche e₁, e₂ bzw. e₃ von unterschiedlichen Meßorten an dem zu untersuchenden Objekt O gewonnen und wie dargestellt weiterverarbeitet. Bei hinreichender Nähe dieser Meßorte zueinander wird eine für viele Zwecke befriedigende Autofokussiergenauigkeit erreicht. Da in diesem Fall nur kleinere Meßraten für die Datenaufnahme erforderlich sind, kann anstelle eines Zeilenempfängers auch ein kostengünstigerer 2D-Empfänger mit einer flächigen CCD-Matrix zum Einsatz kommen.

In den beiden beschriebenen Ausführungsbeispielen nach Fig.1 und Fig.5 ist die Empfängerzeile 6 gegenüber der optischen Achse A' des Meßstrahlenganges geneigt, wohingegen die Spaltblende 8 senkrecht zu der optischen Achse A angeordnet ist. In einer abgewandelten Ausführungsvariante kann zusätzlich auch die Spaltblende 8 aus ihrer senkrechten Position gegenüber der optischen Achse A geneigt werden. Weiterhin ist es möglich, lediglich die Spaltblende 8 gegenüber der optischen Achse A zu neigen und die Empfängerzeile 6 in einer nicht geneigten Stellung senkrecht zu der optischen Achse A anzuordnen. Entscheidend ist stets die Neigung der Empfangsbereiche relativ zu den Bildern der zugeordneten Blendenöffnungen.

Im letztgenannten Fall ergibt sich der Vorteil, daß die Empfangseinrichtung gleichzeitig auch als Detektor für ein optisches Hauptsystem eines Mikroskops verwendet werden kann. Dabei wird die Spaltblende 8 so in den Strahlengang eingeordnet, daß sie lediglich einen sehr geringen Anteil des Bildfeldes einnimmt, so daß die Beobachtung des Objektes O durch die Autofokussiereinrichtung 1 bzw. die Spaltblende 8 nicht wesentlich beeinträchtigt wird.

Selbstverständlich können die erfindungsgemäßen Autofokussiereinrichtungen einschließlich ihrer Varianten auch in anderen optischen Geräten, beispielsweise Projektoren, eingesetzt werden. In jedem Fall wird eine hohe Fokussiergenauigkeit verbunden mit einer hohen Fokussiergeschwindigkeit erzielt.

### Bezugszeichenliste

- 1: Autofokussiereinrichtung
- 2: Beleuchtungsquelle
- 3: Abbildungsoptik
- 4: Teilerschicht
- 5: Strahlteiler
- 6: Empfängerzeile
- 7: Leuchtfeldblende
- 8: Spaltblende
- 8': Bild der Spaltblende
- 9: Spaltöffnungen
- 9' 10: Einzellochöffnungen
- 11: Verschiebeeinrichtung
- 12: Auswerteeinrichtung
- 13: Synchronisiereinrichtung
- 14: Zustelleinrichtung

- A: optische Achse
- A': optische Achse
- α: Neigungswinkel
- b₁, b₂, b₃: Teilbereiche
- E: Ebene
- e₁, e₂, e₃: Empfangsbereiche
- I: Intensitätswert
- M: Meßort
- O: Objekt
- p₁, p₂, p₃: Orte
- R: Bewegungsrichtung
- R', V: Richtungen der Blendenöffnung
- R", V': Richtungen der Empfängerzeile
- S: Stellgröße

## Patentansprüche

1. Autofokussiereinrichtung für ein optisches Gerät, insbesondere für ein Mikroskop, wobei
- eine Beleuchtungsquelle (2) und eine Abbildungsoptik (3) vorgesehen ist, derart dass Beleuchtungslicht der Beleuchtungsquelle mittels der Abbildungsoptik (3) auf ein Objekt (O) mit Meßorten (M) gerichtet ist,
- eine Einrichtung (11) zum kontinuierlichen Verschieben des Objekts (O) in einer zur optischen Achse (A) der Abbildungsoptik (3) zumindest etwa senkrechten Richtung (R) vorgesehen ist,
- im Beleuchtungsstrahlengang zwischen Beleuchtungsquelle(2) und Abbildungsoptik (3) eine Blendeneinrichtung (8) angeordnet ist mit mindestens einer Blendenöffnung (9; 9'), die in einer mit der Bewegungsrichtung (R) des Objektes (O) gleichsinnigen Richtung (R') ausgedehnt ist,
- im Meßstrahlengang eine Empfangseinrichtung (6) für das von einem Meßort (M) am Objekt (O) kommende Meßlicht vorhanden ist mit einzelnen, gesondert auswertbaren Empfangsbereichen (e₁, e₂ ... eₙ), die in einer mit der Bewegungsrichtung (R) des Objektes (O) gleichsinnigen Richtung (R") aneinandergereiht sind,
- entweder die Blendenöffnung (9; 9') gegen die optische Achse (A) des Beleuchtungsstrahlenganges oder die aneinandergereihten Empfangsbereiche (e₁, e₂ ... eₙ) gegen die optische Achse (A') des Meßstrahlenganges um einen Winkel 0°<α<90° geneigt ist, so daß das Bild der Blendeneinrichtung (8) ebenfalls um den Winkel α geneigt auf die Empfangsbereiche (e₁, e₂ ... eₙ) fällt und dabei die Empfangseinrichtung (6) und die Blendenöffnung (9; 9') so zueinander positioniert sind, daß charakteristische Meßwerte dann an den Empfangsbereichen (e₁, e₂...eₙ) gemessen werden, wenn sich der Meßort (M) in oder nahe der Fokusposition befindet,
- eine Synchronsteuerung (13) vorhanden ist, durch welche das sequentielle Auslesen der Meßergebnisse an den Emfangsbereichen (e₁, e₂ ... eₙ) veranlaßt wird und mit welcher die Einrichtung (11) zum kontinuierlichen Verschieben gekoppelt ist und
- eine Auswerteeinrichtung (12) vorgesehen ist, welche die an den Emfangsbereichen (e₁, e₂...eₙ) ausgelesenen Meßwerte mit gespeicherten Sollwerten vergleicht und daraus Signale für das optische Gerät generiert.

2. Autofokussiereinrichtung nach Anspruch 1, **dadurch gekennzeichnet, daß** die Auswerteeinrichtung (12) zum generieren von Stellsignalen für eine Stelleinrichtung ausgebildet ist, durch welche im Falle einer Abweichung zwischen den ausgelesenen Meßwerten und den gespeicherten Sollwerten die Verlagerung der Bewegungsrichtung (R) in die Fokusebene der Abbildungsoptik (3) veranlaßt wird.

3. Autofokussiereinrichtung für ein optisches Gerät, insbesondere für ein Mikroskop, wobei
- eine Beleuchtungsquelle (2) und eine Abbildungsoptik (3) vorgesehen ist, derart dass Beleuchtungslicht der Beleuchtungsquelle mittels der Abbildungsoptik (3) auf einen Meßort (M) an einem Objekt (O) gerichtet ist,
- im Beleuchtungsstrahlengang zwischen Beleuchtungsquelle (2) und Abbildungsoptik (3) eine Blendeneinrichtung (8) mit mindestens einer Blendenöffnung (9; 9') vorgesehen ist, die in einer Vorzugsrichtung (V) ausgedehnt ist,
- im Meßstrahlengang eine Empfangseinrichtung (6) für das vom Meßort (M) kommende Meßlicht vorhanden ist, die gesondert auswertbare, in einer mit der Vorzugsrichtung (V) korrespondierenden Richtung (V') aneinandergereihte Empfangsbereiche (e₁, e₂...eₙ) aufweist,
- entweder die Blendenöffnung (9; 9') gegen die optische Achse (A) des Beleuchtungsstrahlenganges oder die aneinandergereihten Empfangsbereiche (e₁, e₂...eₙ) gegen die optische Achse (A') des Meßstrahlenganges um einen Winkel 0°<α<90° geneigt sind, so daß das Bild der Blendeneinrichtung ebenfalls um den Winkel α geneigt die auf die Empfangsbereiche (e₁, e₂...eₙ) fällt und auf einen der Empfangsbereiche (e₂) Meßlicht mit höchster Intensität dann trifft, wenn ein zugeordneter Teilbereich (b₂) der Blendenöffnung (9; 9') mit diesem Empfangsbereich (e₂) konjugiert ist,
- eine Zustelleinrichtung (14) zur Veränderung des Abstandes (z) des Meßortes (M) in Richtung der optischen Achse (A) der Abbildungseinrichtung (3) vorhanden ist und
- eine Auswerteeinrichtung (12) vorgesehen ist, die eine Information über das Erreichen der Fokuslage dann ausgibt, wenn bei Veränderung des Abstandes (z) das Meßlicht an den Empfangsbereichen (e₁, e₂...eₙ) Meßwerte verursacht, die vorgegebenen Vergleichswerten entsprechen.
wobei die Auswerteeinrichtung (12) weiterhin derart ausgestaltet ist, dass die Information über das Erreichen der Fokuslage dann ausgegeben wird, wenn an einem vorgegebenen Empfangsbereich (e₂) die maximale Meßlichtintensität gemessen wird.

4. Autofokussiereinrichtung nach Anspruch 3, **dadurch gekennzeichnet, daß**
- die Auswerteeinrichtung (12) zur Ermittlung desjenigen der Empfangsbereiche (e₁, e₂...eₙ) ausgebildet ist, auf den bei einem gegebenen Abstand (z) eines Meßortes (M) die maximale Meßlichtintensität trifft,
- die Auswerteeinrichtung (12) weiterhin ausgebildet ist zur Generierung einer Stellgröße (S) aus der Differenz der Position des so ermittelten Empfangsbereiches (e₁, e₂ ... eₙ) und der Position eines vorgegebenen Empfangsbereiches (e₂), auf den die maximale Meßlichtintensität dann trifft, wenn sich ein Meßort (M) in oder nahe der Fokusposition befindet und
- die Zustelleinrichtung (14) über einen mit der Auswerteeinrichtung (12) verbundenen Antrieb verfügt, über den in Abhängigkeit von der Stellgröße (S) eine Änderung des Abstandes (z) veranlaßt wird, bis die maximale Meßlichtintensität auf den vorgegebenen Empfangsbereich (e₂) trifft.

5. Autofokussiereinrichtung nach einem der vorgenannten Ansprüche, **dadurch gekennzeichnet, daß**
- die Empfangseinrichtung als Empfängerzeile (6) ausgebildet ist, die aus einer Vielzahl von nebeneinander aufgereihten Einzelsensoren besteht, wobei jeweils ein Empfangsbereich (e₁, e₂...eₙ) einem Einzelsensor entspricht und
- die Blendeneinrichtung (8) so in den Strahlengang gestellt ist, daß eine von ihrer Blendenöffnung (9) erzeugte "Beleuchtungslinie" in Längsrichtung auf die Empfängerzeile (6) fällt und diese überdeckt.

6. Autofokussiereinrichtung nach Anspruch 6, **dadurch gekennzeichnet, daß** die Blendenöffnung (9; 9') senkrecht zur optischen Achse (A) des Beleuchtungsstrahlenganges und die Empfängerzeile (6) um den Winkel α=45° gegen die Optische Achse (A') des Meßstrahlenganges geneigt ausgerichtet sind.

7. Autofokussiereinrichtung nach Anspruch 6, **dadurch gekennzeichnet, daß** die Blendenöffnung (9) als durchgehende Spaltöffnung ausgebildet ist und jedem Einzelsensor der Empfängerzeile (6) ein Abschnitt der Spaltöffnung als Blendenbereich (b₁, b₂...bₙ) zugeordnet ist.

8. Autofokussiereinrichtung nach Anspruch 6, **dadurch gekennzeichnet, daß** die Blendenöffnung als Lochblende aus einer Vielzahl von nebeneinander aufgereihten Einzelblenden (9') ausgebildet ist und jedem Einzelsensor der Empfängerzeile (6) eine Einzelblende als Blendenbereich (b₁, b₂...bₙ) zugeordnet ist.

9. Autofokussiereinrichtung nach einem der vorgenannten Ansprüche, **dadurch gekennzeichnet, daß** als Empfängerzeile (6) eine CCD-Zeile vorgesehen ist und jedes Pixel der CCD-Zeile einem Einzelsensor entspricht.

10. Autofokussiereinrichtung nach einem der vorgenannten Ansprüche, **dadurch gekennzeichnet, daß** die Blendeneinrichtung (8) mehrere parallel ausgerichtete Spaltöffnungen (9) oder Reihen aus Einzelblenden aufweist und dadurch mehrere "Beleuchtungslinien" erzeugt, die auf die Empfangseinrichtung (6) fallen und die Empfangseinrichtung (6) mehrere parallel zueinander ausgerichtete Empfängerzeilen mit jeweils einer Vielzahl nebeneinander aufgereihten Einzelsensoren aufweist, wobei jeweils ein Einzelsensor einem Blendenbereich zugeordnet ist.

11. Autofokussiereinrichtung nach einem der vorgenannten Ansprüche, **dadurch gekennzeichnet, daß** die Empfangseinrichtung als positionsempfindlicher Flächenempfänger ausgebildet ist und jeweils ein Empfangsbereich (e₁, e₂...eₙ) des Flächenempfängers einem Blendenbereich (b₁, b₂...bₙ) einer Spaltöffnung bzw. einer Einzellochblende zugeordnet ist.

12. Autofokussiereinrichtung nach einem der vorgenannten Ansprüche, **dadurch gekennzeichnet, daß** als Empfangseinrichtung eine kontinuierlich messende CCD-Kamera vorgesehen ist.

13. Autofokussiereinrichtung nach einem der vorgenannten Ansprüche, **dadurch gekennzeichnet, daß** die Auswerteeinrichtung (12) zur Ableitung eines Kontrastwertes aus den gemessenen Intensitätswerten ausgebildet ist und der Kontrastwert der Generierung der Stellgröße (S) zugrunde gelegt wird, wobei zwecks Kontrastbildung jeweils eine Lochblende mehreren Einzelsensoren zugeordnet ist.

14. Autofokussiereinrichtung nach einem der vorgenannten Ansprüche, **dadurch gekennzeichnet, daß** die Blendeneinrichtung in den Beleuchtungsstrahlengang des optischen Hauptsystems eines Konfokal-Mikroskops eingeordnet, die Empfangseinrichtung Teil des optoelektronischen Sensors des Hauptsystems des Konfokal-Mikroskops und/oder die Beleuchtungsquelle der Autofokussiereinrichtung zugleich Beleuchtungsquelle für das Hauptabbildungssystem eines Konfokal-Mikroskops ist.

15. Autofokussiereinrichtung nach einem der vorgenannten Ansprüche, **dadurch gekennzeichnet, daß** in den Meßstrahlengang vor der Empfangseinrichtung eine Vergrößerungs- oder Verkleinerungsoptik eingeordnet ist.

## Claims

1. Auto-focussing device for an optical apparatus, in particular for a microscope,
wherein
- an illumination source (2) and imaging optics (3) are provided such that illumination light from the illumination source is directed onto an object (O) having measuring points (M) by means of the imaging optics (3),
- a device (11) is provided for continuously displacing the object (O) in a direction (R) at least approximately perpendicular to the optical axis (A) of the imaging optics (3),
- a diaphragm device (8) is disposed in the illumination beam path between the illumination source (2) and the imaging optics (3), said diaphragm device having at least one diaphragm aperture (9; 9') which extends in the same direction (R') as the direction of movement (R) of the object (O),
- a receiving device (6) for the measuring light emanating from a measuring point (M) on the object (O) is provided in the measuring beam path, said receiving device having individual receiving regions (e₁, e₂ ... eₙ) which can be evaluated separately and are disposed in a row next to each other in the same direction (R'') as the direction of movement (R) of the object (O),
- either the diaphragm aperture (9; 9') is inclined with respect to the optical axis (A) of the illumination beam path by an angle 0° < α < 90° or the receiving regions (e₁, e₂ ... eₙ) disposed in a row next to each other are inclined with respect to the optical axis (A') of the measuring beam path by an angle 0° < α < 90°, so that the image from the diaphragm device (8) likewise inclined by the angle α falls onto the receiving regions (e₁, e₂ ... eₙ) and in so doing the receiving device (6) and the diaphragm aperture (9; 9') are positioned with respect to each other such that characteristic measured values are then measured at the receiving regions (e₁, e₂ ... eₙ) when the measuring point (M) is located in or near the focus position,
- a synchronous control (13) is provided, which initiates the sequential reading out of the measuring results at the receiving regions (e₁, e₂ ... eₙ) and to which the device (11) for continuous displacement is coupled and
- an evaluating device (12) is provided which compares the measured values read out at the receiving regions (e₁, e₂ ... eₙ) with stored desired values and from this generates signals for the optical apparatus.

2. Auto-focussing device as claimed in Claim 1, **characterised in that** the evaluating device (12) is formed for the purpose of generating control signals for a control device which causes the direction of movement (R) to be shifted into the plane of focus of the imaging optics (3) if the read out measured values deviate from the stored desired values.

3. Auto-focussing device for an optical apparatus, in particular for a microscope,
wherein
- an illumination source (2) and imaging optics (3) are provided such that illumination light from the illumination source is directed onto a measuring point (M) on an object (O) by means of the imaging optics (3),
- a diaphragm device (8) is provided in the illumination beam path between the illumination source (2) and the imaging optics (3), said diaphragm device having at least one diaphragm aperture (9; 9') which extends in a preferred direction (V),
- a receiving device (6) for the measuring light emanating from the measuring point (M) is provided in the measuring beam path, said receiving device comprising receiving regions (e₁, e₂ ... eₙ) which can be evaluated separately and are disposed in a row next to each other in a direction (V') corresponding to the preferred direction (V),
- either the diaphragm aperture (9; 9') is inclined with respect to the optical axis (A) of the illumination beam path by an angle 0° < α < 90° or the receiving regions (e₁, e₂ ... eₙ) disposed in a row next to each other are inclined with respect to the optical axis (A') of the measuring beam path by an angle 0° < α < 90°, so that the image from the diaphragm device likewise inclined by the angle α falls onto the receiving regions (e₁, e₂ ... eₙ) and measuring light having the highest intensity then impinges upon one of the receiving regions (e₂) when an associated partial region (b₂) of the diaphragm aperture (9; 9') is conjugated with this receiving region (e₂),
- an adjusting device (14) is provided for altering the distance (z) of the measuring point (M) in the direction of the optical axis (A) of the imaging device (3) and
- an evaluating device (12) is provided which outputs information regarding whether the focus location has been reached if, as the distance (z) is altered, the measuring light produces measured values at the receiving regions (e₁, e₂ ... eₙ) which correspond to predetermined comparative values,
wherein the evaluating device (12) is further formed such that the information regarding whether the focus location has been reached is then output if the maximum measuring light intensity is measured at a predetermined receiving region (e₂).

4. Auto-focussing device as claimed in Claim 3, **characterised in that**
- the evaluating device (12) is formed for the purpose of determining the particular one of the receiving regions (e₁, e₂ ... eₙ), upon which the maximum measuring light intensity impinges when the measuring point (M) is at a given distance (z),
- the evaluating device (12) is further formed for generating a control variable (S) from the difference between the position of the thus determined receiving region (e₁, e₂ ... eₙ) and the position of a predetermined receiving region (e₂), upon which the maximum measuring light intensity then impinges when a measuring point (M) is located in or near the focus position and
- the adjusting device (14) has a drive which is connected to the evaluating device (12) and which causes the distance (z) to be altered in dependence upon the control variable (S) until the maximum measuring light intensity impinges upon the predetermined receiving region (e₂).

5. Auto-focussing device as claimed in any one of the preceding Claims, **characterised in that**
- the receiving device is formed as a receiver line (6) which consists of a plurality of individual sensors disposed in a row next to each other, wherein a receiving region (e₁, e₂ ... eₙ) corresponds to an individual sensor in each case and
- the diaphragm device (8) is positioned in the beam path such that an "illumination line" produced by its diaphragm aperture (9) falls on, and overlaps, the receiver line (6) in the longitudinal direction.

6. Auto-focussing device as claimed in Claim 6 [*sic*]*,* **characterised in that** the diaphragm aperture (9, 9') is aligned in a perpendicular manner with respect to the optical axis (A) of the illumination beam path and the receiver line (6) is directed so as to be inclined by the angle α = 45° with respect to the optical axis (A') of the measuring beam path.

7. Auto-focussing device as claimed in Claim 6, **characterised in that** the diaphragm aperture (9) is formed as a through-going slit aperture and a section of the slit aperture is allocated as the diaphragm region (b₁, b₂ ... bₙ) to each individual sensor of the receiver line (6).

8. Auto-focussing device as claimed in Claim 6, **characterised in that** the diaphragm aperture is formed as an apertured diaphragm consisting of a plurality of individual diaphragms (9') disposed in a row next to each other and an individual diaphragm is allocated as the diaphragm region (b₁, b₂ ... bₙ) to each individual sensor of the receiver line (6).

9. Auto-focussing device as claimed in any one of the preceding Claims, **characterised in that** a CCD line is provided as the receiver line (6) and each pixel of the CCD line corresponds to an individual sensor.

10. Auto-focussing device as claimed in any one of the preceding Claims, **characterised in that** the diaphragm device (8) comprises several parallel-aligned slit apertures (9) or rows of individual diaphragms and consequently produces several "illumination lines" which fall onto the receiving device (6) and the receiving device (6) comprises several receiver lines which are aligned in parallel with each other and each have a plurality of individual sensors which are disposed in a row next to each other, wherein an individual sensor is allocated to a diaphragm region in each case.

11. Auto-focussing device as claimed in any one of the preceding Claims, **characterised in that** the receiving device is formed as a position-sensitive surface receiver and a receiving region (e₁, e₂ ... eₙ) of the surface receiver is allocated to a diaphragm region (b₁, b₂ ... bₙ) of a slit aperture or an individual apertured diaphragm in each case.

12. Auto-focussing device as claimed in any one of the preceding Claims, **characterised in that** a continuously measuring CCD camera is provided as the receiving device.

13. Auto-focussing device as claimed in any one of the preceding Claims, **characterised in that** the evaluating device (12) is formed for deducing a contrast value from the measured intensity values and the contrast value is used as the basis for generating the control variable (S), wherein an apertured diaphragm is allocated to several individual sensors in each case in order to form the contrast.

14. Auto-focussing device as claimed in any one of the preceding Claims, **characterised in that** the diaphragm device is arranged in the illumination beam path of the main optical system of a confocal microscope, the receiving device is part of the optoelectronic sensor of the main system of the confocal microscope and/or the illumination source of the auto-focussing device is simultaneously the illumination source for the main imaging system of a confocal microscope.

15. Auto-focussing device as claimed in any one of the preceding Claims, **characterised in that** magnifying optics or minifying optics are arranged in the measuring beam path upstream of the receiving device.

## Revendications

1. Dispositif d'autofocalisation pour un appareil optique, en particulier pour un microscope, dans lequel
- il est prévu une source d'éclairage (2) et une optique de reproduction (3) telles que la lumière de la source d'éclairage est dirigée au moyen de l'optique de reproduction (3) sur un objet (O) avec des points de mesure (M),
- il est prévu un dispositif (11) pour déplacer en continu l'objet (0) dans une direction (R) au moins sensiblement perpendiculaire à l'axe optique (A) de l'optique de reproduction (3),
- dans le trajet du faisceau d'éclairage, entre la source d'éclairage (2) et l'optique de reproduction (3), est disposé un dispositif à diaphragme (8), avec au moins une ouverture de diaphragme (9 ; 9'), qui s'étend dans une direction (R') de même sens que la direction (R) de déplacement de l'objet (O),
- dans le trajet du faisceau de mesure se trouve un dispositif de réception (6) pour la lumière de mesure venant d'un point de mesure (M) sur l'objet (O), avec des zones de réception individuelles, exploitables séparément (e₁, e₂ ... eₙ) qui sont disposées les unes à la suite des autres dans une direction (R") de même sens que la direction de déplacement (R) de l'objet (O),
- l'ouverture de diaphragme (9 ; 9') est inclinée par rapport à l'axe optique (A) du trajet du faisceau d'éclairage ou bien les zones de réception (e₁, e₂ ... eₙ) disposées à la suite les unes des autres sont inclinées par rapport à l'axe optique (A') du trajet du faisceau de mesure d'un angle 0° < α < 90° de telle façon que l'image du dispositif à diaphragme (8) vient frapper les zones de réception (e₁, e₂ ... eₙ) selon une inclinaison elle aussi égale à l'angle α et que le dispositif de réception (6) et l'ouverture de diaphragme (9 ; 9') sont positionnés l'un par rapport à l'autre de façon à mesurer des valeurs de mesure caractéristiques dans les zones de réception (e₁, e₂ ... eₙ) lorsque le point de mesure (M) se trouve dans la position focale ou au voisinage de celle-ci,
- il est prévu une commande synchrone (13) qui permet de lire séquentiellement les résultats de mesure sur les zones de réception (e₁, e₂ ... eₙ) à laquelle le dispositif (11) de déplacement en continu est couplé, et
- il est prévu un dispositif de traitement (12) qui compare les valeurs de mesures relevées sur les zones de réception (e₁, e₂ ... eₙ) à des valeurs théoriques mémorisées et qui génère à partir de cette comparaison des signaux pour l'appareil optique.

2. Dispositif d'autofocalisation selon la revendication 1, **caractérisé en ce que** le dispositif de traitement (12) est configuré pour générer des signaux de réglage pour un dispositif de réglage qui, en cas d'écart entre les valeurs de mesure relevées et les valeurs théoriques mémorisées, sert à décaler la direction de déplacement (R) dans le plan focal de l'optique de reproduction (3).

3. Dispositif d'autofocalisation pour un appareil optique, en particulier pour un microscope, dans lequel
- il est prévu une source d'éclairage (2) et une optique de reproduction (3) telles que la lumière de la source d'éclairage est dirigée au moyen au moyen de l'optique de reproduction (3) sur un point de mesure (M) d'un objet (O),
- dans le trajet du faisceau d'éclairage, entre la source d'éclairage (2) et l'optique de reproduction (3), est disposé un dispositif à diaphragme (8), avec au moins une ouverture de diaphragme (9 ; 9'), qui s'étend dans une direction préférentielle (V),
- dans le trajet du faisceau de mesure se trouve un dispositif de réception (6) pour la lumière de mesure venant du point de mesure (M) qui présente des zones de réception (e₁, e₂ ... eₙ) exploitables séparément, disposées les unes à la suite des autres dans une direction (V') correspondant à la direction préférentielle (V),
- l'ouverture de diaphragme (9 ; 9') est inclinée par rapport à l'axe optique (A) du trajet du faisceau d'éclairage ou bien les zones de réception (e₁, e₂ ... eₙ) disposées les unes à la suite des autres sont inclinées par rapport à l'axe optique (A') du trajet du faisceau de mesure d'un angle 0° < α < 90° de telle façon que l'image du dispositif à diaphragme (8) vient frapper les zones de réception (e₁, e₂ ... eₙ) selon une inclinaison elle aussi égale à l'angle α et la lumière de mesure vient frapper l'une des zones de réception (e₂) avec l'intensité la plus élevée lorsqu'une zone partielle affectée (b₂) de l'ouverture de diaphragme (9 ; 9') est conjuguée à cette zone de réception (e₂),
- il est prévu un mécanisme de positionnement (14) pour modifier la distance (z) du point de mesure (M) en direction de l'axe optique (A) du dispositif de reproduction (3), et
- il est prévu un dispositif de traitement (12) qui délivre une information indiquant que la position focale est atteinte lorsque, après que la distance (z) a été modifiée, la lumière de mesure génère dans les zones de réception (e₁, e₂ ... eₙ) des valeurs de mesure qui correspondent à des valeurs de comparaison prédéterminées, le dispositif de traitement (12) étant en outre configuré de façon à délivrer l'information indiquant que la position focale est atteinte lorsque l'intensité maximale de la lumière de mesure est mesurée dans une zone de réception (en) prédéterminée.

4. Dispositif d'autofocalisation selon la revendication 3,
**caractérisé en ce que**
- le dispositif de traitement (12) est configuré pour déterminer celle des zones de réception (e₁, e₂ ... eₙ) qui reçoit l'intensité maximale de la lumière de mesure à une distance (z) donnée d'un point de mesure (M),
- le dispositif de traitement (12) est en outre configuré pour générer une grandeur de réglage (S) à partir de la différence entre la position de la zone de réception (e₁, e₂ ... eₙ) ainsi déterminée et la position d'une zone de réception prédéterminée (e₂) qui reçoit l'intensité maximale de la lumière de mesure lorsqu'un point de mesure (M) se trouve dans la position focale ou au voisinage de celle-ci, et
- le dispositif de positionnement (14) est muni d'un entraînement, relié au dispositif de traitement (12), qui assure une modification de la distance (z) en fonction de la grandeur de réglage (S) jusqu'à ce que la zone de réception (e₂) reçoive l'intensité maximale de la lumière de mesure.

5. Dispositif d'autofocalisation selon l'une des revendications précédentes, **caractérisé en ce que**
- le dispositif de réception est réalisé sous la forme d'une ligne de réception (6) composée d'une pluralité de capteurs individuels disposés en série les uns à côtés des autres, une zone de réception (e₁, e₂ ... eₙ) correspondant respectivement à un capteur individuel, et
- le dispositif à diaphragme (8) est disposé dans le trajet du faisceau de façon que la "ligne d'éclairage" générée par son ouverture de diaphragme (9) vient frapper la ligne de réception (6) dans le sens longitudinal et la recouvre.

6. Dispositif d'autofocalisation selon la revendication 5, **caractérisé en ce que** l'ouverture de diaphragme (9 ; 9') est orientée perpendiculairement à l'axe optique (A) du trajet du faisceau d'éclairage et **en ce que** la ligne de réception (6) est inclinée d'un angle α = 45° par rapport à l'axe optique (A') du trajet du faisceau de mesure.

7. Dispositif d'autofocalisation selon la revendication 6, **caractérisé en ce que** l'ouverture de diaphragme (9) est réalisée sous la forme d'une ouverture à fente continue et **en ce qu'**un segment de l'ouverture à fente est affecté à chaque capteur individuel de la ligne de réception (6) en tant que zone de diaphragme (b₁, b₂ ... bₙ).

8. Dispositif d'autofocalisation selon la revendication 6, **caractérisé en ce que** l'ouverture de diaphragme est réalisée sous la forme d'un diaphragme à trou constitué d'une pluralité de diaphragmes individuels (9') disposés en série les uns à côté des autres et **en ce qu'**un diaphragme individuel est affecté à chaque capteur individuel de la ligne de réception (6) en tant que zone de diaphragme (b₁, b₂ ... bₙ).

9. Dispositif d'autofocalisation selon l'une des revendications précédentes, **caractérisé en ce qu'**il est prévu comme ligne de réception (6) une ligne CCD et **en ce que** chaque pixel de la ligne CCD correspond à un capteur individuel.

10. Dispositif d'autofocalisation selon l'une des revendications précédentes, **caractérisé en ce que** le dispositif à diaphragme (8) présente plusieurs ouvertures à fente (9) orientées parallèlement ou des rangées de diaphragmes individuels et génère par ce moyen plusieurs "lignes d'éclairage" qui viennent frapper le dispositif de réception (6), et **en ce que** le dispositif de réception (6) présente plusieurs lignes de réception orientées parallèlement les unes aux autres et possédant chacune une pluralité de capteurs individuels disposés en série les uns à côté des autres, un capteur individuel étant affecté respectivement à une zone de diaphragme.

11. Dispositif d'autofocalisation selon l'une des revendications précédentes, **caractérisé en ce que** le dispositif de réception est réalisé sous la forme d'un récepteur plan sensible à la position et **en ce qu'**une zone de réception (e₁, e₂ ... eₙ) du récepteur plan est affectée à une zone de diaphragme (b₁, b₂ ... bₙ) d'une ouverture à fente ou d'un diaphragme à trou individuel.

12. Dispositif d'autofocalisation selon l'une des revendications précédentes, **caractérisé en ce qu'**il est prévu comme dispositif de réception une caméra CCD effectuant des mesures en continu.

13. Dispositif d'autofocalisation selon l'une des revendications précédentes, **caractérisé en ce que** le dispositif de traitement (12) est configuré pour dériver une valeur de contraste à partir des valeurs d'intensité mesurées et **en ce que** la valeur de contraste est utilisée pour générer la grandeur de réglage (S), un diaphragme à trou étant respectivement affecté à plusieurs capteurs individuels pour former le contraste.

14. Dispositif d'autofocalisation selon l'une des revendications précédentes, **caractérisé en ce que** le dispositif à diaphragme est intégré dans le trajet du faisceau d'éclairage du système optique principal d'un microscope confocal, **en ce que** le dispositif de réception fait partie du capteur optoélectronique du système principal du microscope confocal et/ou **en ce que** la source d'éclairage du dispositif d'autofocalisation est en même temps la source d'éclairage du système de reproduction principal d'un microscope confocal.

15. Dispositif d'autofocalisation selon l'une des revendications précédentes, **caractérisé en ce qu'**une optique d'agrandissement ou de réduction est intégrée dans le trajet du faisceau de mesure avant le dispositif de réception.
